(19) Europäisches Patentamt
European Patent Office
Office européen des brevets

(11) Publication number: 0 366 392 A2

(12) # EUROPEAN PATENT APPLICATION

(21) Application number: 89310905.8

(22) Date of filing: 23.10.89

(51) Int. Cl.5: C08G 63/60 , C09K 19/38 , C08L 67/02

(30) Priority: 24.10.88 JP 267617/88

(43) Date of publication of application: 02.05.90 Bulletin 90/18

(84) Designated Contracting States: AT BE CH DE ES FR GB GR IT LI LU NL SE

(71) Applicant: POLYPLASTICS CO. LTD.
3-13, Azuchicho, 2-chome
Chuo-Ku Osaka-shi Osaka(JP)

(72) Inventor: Hayashi, Noriyuki
52, Morishita
Fuji-Shi Shizuoka(JP)
Inventor: Kageyama, Yukihiko
815, Gendojicho
Fujinomiya-shi Shizuoka(JP)
Inventor: Hijikata, Kenji
8-8, Fujimidai
Mishima-shi Shizuoka(JP)

(74) Representative: Jackson, Peter et al
HYDE, HEIDE & O'DONNELL 146 Buckingham Palace Road
London SW1W 9TR(GB)

(54) **Polyester resin exhibiting optical anisotropy in molten state and resin composition.**

(57) A polyester resin exhibiting optical anisotropy in a molten state comprises constituent units represented by the following formula (I) to (III) as essential components wherein the contents of the units (I), (II) and (III) are less than 30 mole %, 30 to 45 mole % and 30 to 45 mole %, respectively, based on the total amount of the constituent units:

EP 0 366 392 A2

( I ) 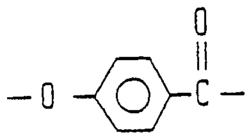

( II ) 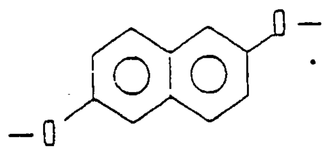

( III ) 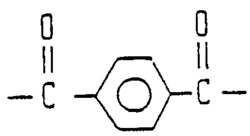

# POLYESTER RESIN EXHIBITING OPTICAL ANISOTROPY IN MOLTEN STATE AND RESIN COMPOSITION

The present invention relates to a polyester resin exhibiting optical anisotropy in a molten state which is excellent in heat resistance, processability and mechanical properties and a composition containing it.

## [Prior Art]

Various polymers exhibiting optical anisotropy in a molten state (liquid-crystal polymers) have been proposed as thermoplastic resins excellent in both heat resistance and processability. Representative examples thereof are polymers disclosed in Japanese Patent Laid-Open Nos. 72393/1974 (1), 43223/1975 (2) and 77691/1979 (3). These liquid-crystal polymers each exhibit liquid-crystallinity by virtue of the rigid segment incorporated into its skeleton, so that they are excellent in strengths and heat resistance and are easily processable by virtue of their excellent melt flowability.

However, it is necessary for attaining the practical use of a liquid-crystal polymer in industrial fields that it must be further improved in the respects which will be described hereinbelow to thereby improve the heat resistance and processability thereof additionally.

More precisely, with respect to processability, a thermoplastic resin should have suitable flow-initiating temperature and flowability in a molten state and should be thermally stable enough to cause neither generation of gas nor discoloration in the processing thereof.

Among them, the flow-initiating temperature and the flowability can be improved by utilizing the nature of liquid crystal. However, when the processing of a thermoplastic resin is carried out at a temperature exceeding 300 °C, it is difficult to inhibit the generation of decomposition gas and the discoloration in the processing by the addition of a conventional stabilizer for thermoplastic polymers, so that the processing temperature of a thermoplastic resin cannot be raised exceedingly.

The preferred molding temperature for a thermoplastic resin, particularly polyester, is about 370 °C or below. At a temperature exceeding 370 °C, the thermal degradation of a thermoplastic resin itself proceeds rapidly, so that no consistent strength of a thermoplastic resin can be guaranteed after such thermal history. Further, such a temperature is beyond the service temperature range of a conventional molding machine.

With respect to heat resistance, a thermoplastic resin should be excellent in retention of form and mechanical strength in a high-temperature atmosphere. For many electrical applications the thermoplastic resin is inevitably subjected to soldering, so that the stability of its form at 260 °C or above is more important.

From the standpoint described above, a liquid-crystal polymer should also be improved satisfactorily in both processability and heat resistance. However, the two characteristics are contradictory to each other for conventional thermoplastic resins, so that it is very difficult to lower the melting point or pour point of a liquid-crystal polymer, which is an indication of the processability thereof, while enhancing the reliability of form retention and mechanical properties thereof at a high temperature.

Among the liquid-crystal polymers previously proposed, those disclosed in the reference (1) are problematic in that the molding temperature thereof exceeds 400 °C to generate a significant amount of decomposition gas during the molding, thus being poor in heat stability. Those disclosed in the references (2) and (3) are problematic in reliability at high temperature, because the polymers disclosed in the reference (2) cannot retain their forms at 260 °C or above which is a temperature necessary for soldering, while those disclosed in the reference (3) are unsatisfactory in reliability of retention of the strengths at high temperature, though both of them disclosed in the two references satisfy a requirement that the shaping temperature of a resin must not exceed about 370 °C.

## ( Summary of the Invention )

In view of the above problems, the inventors of the present invention have intensively studied to obtain a thermoplastic resin which satisfies both of excellent heat resistance and processability which are contradictory to each other and is excellent in reliability of mechanical properties even in a severe atmosphere and have found that a polyester comprising specified constituent units can overcome the above problems with a good balance. The present invention has been accomplished on the basis of this finding.

Namely, the present invention relates to a polyester resin exhibiting optical anisotropy in a molten state which comprises constituent units represented by the following formulae (I) to (III) as essential components,

wherein the contents of the units (I), (III) and (III) are less than 30 mole %, 30 to 45 mole % and 30 to 45 mole %, respectively, based on the total amount of the constituent units:

( I ) 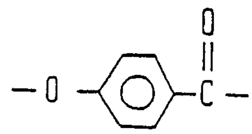

( II ) 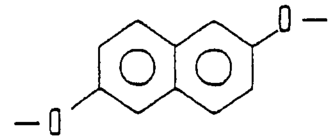

( III ) 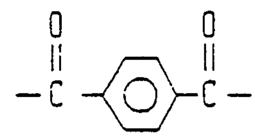

The present invention provides a polyester which comprises specified constituent units as described above at a specified ratio as described above to thereby attain excellent processability and excellent form-retentivity in a high-temperature atmosphere such as soldering, both of which are well-balanced between each other.

It has already been known that a homopolymer of the unit (I) and a copolymer comprising the units (II) and (III) (1,4-substituted compound) cannot be molten at a temperature of 400° C or lower, so that they are each unprocessable alone. On the other hand, a terpolymer obtained by the combination of the units (I), (II) and (III) exhibits a lowered melting point as compared with the above homopolymer and copolymer, therefore being processable.

The starting compound for the constituent unit (I) is p-hydroxybenzoic acid or a derivative thereof. Examples of the derivative include acid esters such as acetoxybenzoic acid; esters such as methyl, ethyl butyl and phenyl esters of hydroxybenzoic acid; and acyl chlorides such as hydroxybenzoyl chloride.

The constituent unit (I) is used in an amount of less than 30 mole %, preferably 20 to 29 mole % based on the total amount of the constituent units. If the amount is 30 mole % or above, the resulting polyester resin will be unfavorably poor in heat resistance.

The starting compound for the constituent unit (II) is 2,6-dihydroxynaphthalene or a derivative thereof. Examples of the derivative include esters thereof with organic carboxylic acids such as diacetoxynaphthalene and dipropionyloxynaphthalene.

The constituent unit (II) is used in an amount of 30 to 45 mole %, preferably 35 to 40 mole % based on the total amount of the constituent units.

The starting compound for the constituent unit (III) is terephthalic acid or a derivative thereof and examples of the derivative include esters such as methyl, ethyl and phenyl esters of terephthalic acid and acyl chloride such as terephthaloyl chloride.

The constituent unit (III) is used in an amount of 30 to 45 mole %, preferably 35 to 40 mole % based on the total amount of the constituent units.

Further, a constituent unit represented by the following formula (IV):

( IV ) 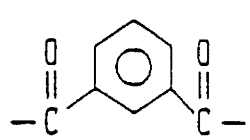

is used for the purpose of regulating the melting point of the polymer to thereby improve the processability.

The starting compound for the constituent unit (IV) is isophthalic acid or a derivative thereof and examples of the derivative include esters such as methyl, ethyl and phenyl esters and acyl chloride such as isophthaloyl chloride.

Although the constituent unit (IV) is not necessarily an essential component, it is preferred to use it in an amount of 0.1 to 7 mole %, still preferably 0.5 to 5 mole % based on the total amount of the constituent units.

The polymer of the present invention can be prepared by the polymerization of the compounds as described above according to the direct polymerization method or the ester interchange method. The polymerization may be generally carried out by melt polymerization or slurry polymerization.

The polymerization may be carried out in the presence of various catalysts. Representative examples thereof include dialkyltin oxides, diaryltin oxides, titanium dioxide, alkoxytitanium silicate, titanium alcoholates, salts of alkali and alkaline earth metals with carboxylic acids and Lewis acids such as $BF_3$.

The amount of the catalyst to be used is generally about 0.001 to 1% by weight, preferably about 0.01 to 0.2% by weight based on the total amount of the monomers used.

The polymer thus prepared may be further polymerized in a solid phase by heating in an inert gas atmosphere to increase the molecular weight thereof.

According to the present invention, the requirement that a polymer should exhibit optical anisotropy in a molten state is essential for the polymer to be excellent in both heat resistance and processability. The presence of an anisotropic molten phase can be ascertained by a conventional test with polarized light using crossed nicols. More precisely, a molten sample placed on a Leitz hot stage is observed in a nitrogen atmosphere by the use of a Leitz polarization microscope (100 x magnification). When polarized light can be transmitted through the nicols even when the sample is in a static molten state, the polymer is defined as an optically anisotropic or liquid-crystal polymer.

The properties serving as an index of processability according to the present invention are liquid-crystallinity and melting point (temperature of developing liquid-crystallinity). Whether a polymer exhibits the liquid-crystallinity or not has a great influence on the melt-flow properties of the polymer. Therefore, it is essential in the present invention that the polyester resin exhibits liquid-crystallinity in a molten state.

Generally, a nematic liquid-crystal polymer exhibits a remarkable viscosity drop at a temperature of its melting point or above, so that the fact that the polyester resin of the present invention exhibits liquid-crystallinity at a temperature of the melting point or above suggests that the resin is excellent in processability. Further, it is preferred in consideration of the heat deterioration of a polymer in melt-processing and the heating capacity of a molding machine that the polyester resin of the present invention have a melting point (temperature of developing liquid-crystallinity) of up to about 370 °C, though it is preferred only from the standpoint of thermal deformation resistance that the melting point thereof be as high as possible. Further, it is still preferred that the polyester resin exhibit a melt viscosity of at most 1 x $10^6$ P, preferably $10^4$ P, under a shear of 100 $sec^{-1}$ at a temperature higher than the melting point thereof by at least 10 °C. A polymer can exhibit such a viscosity in many cases, as far as it has liquid-crystallinity.

The properties serving as an index of heat resistance according to the present invention include not only form retentivity in a high-temperature atmosphere but also rigidity and its retention and retention of mechanical properties after thermal history of shaping. Further, it is necessary that the polyester resin have heat resistance high enough to withstand the soldering heat to be applied thereto, particularly when used in electric fields and so on.

With respect to rigidity at high temperature, the polyester resin may exhibit a torsional rigidity of at least 1 x $10^3$ as determined with a rheometer at 260 °C. From the standpoint of reliability as a material, the polyester resin must not cause any remarkable drop in the rigidity in a temperature range of 260 to 280 °C, i.e., the retention of rigidity must be at least 50%. Further, the polyester resin must not cause any remarkable drop in its rigidity due to its heat deterioration even through a molten state. That is, if the retention of the rigidity based on the initial one is lower than 80%, the reliability of the resin as a material will be damaged.

The polyester resin of the present invention may contain various fibrous, powdery, granular or flaky organic or inorganic fillers.

The fibrous filler includes inorganic fibrous materials, for example, glass fiber, asbestos fiber, silica fiber, silica/alumina fiber, alumina fiber, zirconia fiber, boron nitride fiber, silicon nitride fiber, boron fiber, potassium titanate fiber and fibers of metals such as stainless steel, aluminum, titanium, copper or brass. Among them, glass fiber is the most representative.

The powdery or granular filler includes carbon black, graphite, silica, quartz powder, glass bead, milled glass fiber, glass balloon, glass powder, silicates such as calcium silicate, aluminum silicate, kaolin talc, clay, diatomaceous earth and wollastonite; metal oxides such as iron oxides, titanium oxide, zinc oxide, antimony trioxide and alumina; metal carbonates such as calcium carbonate and magnesium carbonate; metal sulfates such as calcium sulfate and barium sulfate; ferrite, silicon carbide, silicon nitride, boron nitride and various metal powders.

The flaky filler includes mica, glass flake and various metal foils.

The organic filler includes heat-resistant, high-strength synthetic fibers such as aromatic polyester fibers, liquid-crystal polymer fibers, aromatic polyamide and polyimide fibers.

These organic or inorganic fillers may be used alone or as a mixture of two or more of them. The simultaneous use of a fibrous filler with a granular or flaky filler is particularly effective in producing an article which is excellent not only in mechanical strengths but also in dimensional accuracy and electrical properties. The amount of the inorganic filler to be added is at most 95% by weight, preferably 1 to 80% by weight based on the total amount of the composition.

If necessary, a sizing agent or surface treatment may be used together with a filler as described above.

The polyester resin of the present invention may be mixed with another thermoplastic resin as far as the object of the present invention is not hindered.

Examples of the thermoplastic resin to be mixed with the polyester resin include polyolefins such as polyethylene and polypropylene; aromatic polyesters comprising aromatic dicarboxylic acids and diols or hydroxy carboxylic acids, such as polyethylene terephthalate and polybutylene terephthalate; polyacetals (homo- or co-polymer), polystyrene, polyvinyl chloride, polyamide, polycarbonate, ABS, polyphenylene oxide, polyphenylene sulfide and fluororesins. These thermoplastic resins may be used also as a mixture of two or more of them.

The aromatic polyester comprising the specified constituent units and exhibiting optical anisotropy in a molten state and the composition containing it according to the present invention have excellent performance and exhibit excellent flowability at a processing temperature of about 370 °C or below, so that they can be molded by injection, extrusion or compression into various three-dimensional moldings, fibers or films. Particularly, they exhibit excellent flowability in the injection molding thereof. Further, they are also excellent in heat resistance, so that they can retain excellent mechanical strengths even in a high-temperature atmosphere and can keep the form thereof against soldering heat. Therefore, they are applicable to various fields requiring heat resistance and are particularly useful as components to be soldered.

[Example]

The present invention will now be described by referring to the following Examples, though it is not limited to them. The methods of measurement employed therein will first be described.

1) Confirmation of liquid-crystallinity

Whether a resin is a liquid-crystal one or not was determined by the use of a Leitz polarization microscope. More precisely, a molten resin sample placed on a Leitz hot stage was observed with crossed nicols in a nitrogen atmosphere at 100 x magnification. When polarized light was transmitted therethrough to give a unique pattern, the resin sample was defined as a liquid-crystal polymer.

2) Melting point (flow-initiating temperature)

A sample was examined for melting point with a differential thermal analyzer mfd. by Perkin Elmer and the melting point thus determined was regarded as its flow-initiating temperature.

3) Processability

A sample which exhibited liquid-crystallinity and a viscosity of $10^4$ P or below as determined with a Capillograph mfd. by Toyo Seiki Co., Ltd. under a shear of 100 $sec^{-1}$ at a temperature higher than the melting point of the sample by 10 °C is shown by "O", while a sample not satisfying both of the requirements by "X".

4) Determination of resistance to soldering heat

A test piece prepared by cutting a pressed sheet of 1 mm-thickness was immersed in a molten solder bath at 260 °C for 30 seconds to observe the surface thereof. A case wherein an abnormal change such as blister, rumple, crack or deformation was observed is shown by "X", while a case wherein no abnormal change was observed by "O".

5) Determination of modulus of rigidity

A test piece for tensile was prepared by injection molding with Minishot 2 (tradename) of Tsubaco Co., Ltd., a Japanese corporation, and determined at 260 and 280 degree C in view of torsional rigidity, using Rheometer (tradename) of Rheometrics Inc., a U.S. corporation. With respect to a polyester resin composition containing glass fiber, such a composition was preliminarily prepared by the use of a laboratory plastomill mfd. by Toyo Seiki Co., Ltd. and molded into a test piece with the same Mini-shot type 2 as that used above. The resistance of a sample to deformation in soldering can be evaluated by the rigidity thereof in a high- temperature atmosphere. Therefore, the retention of rigidity was calculated by dividing the rigidity at 280 °C by that at 260 °C and was regarded as an index of the reliability of the strengths in a high-temperature atmosphere. In order to attain the reliability, the retention of rigidity must be at least 0.5.

6) Stability in melting

A resin was kept at a temperature higher than the melting point (flow-initiating temperature) of the resin by 10 °C for 30 minutes to observe the surface thereof. A case wherein an abnormal change such as blister, rumple, crack, discoloration or gasification was observed is shown by "X", while a case wherein no abnormal change was observed by "O". Further, the resin which had been kept in a molten state was examined for torsional rigidity at 280 °C according to the method described in the item 4). The retention was calculated by dividing the torsional rigidity thus determined by the one before the melting.

Example 1

As shown in Table 1, 22 mole % of p-acetoxybenzoic acid, 39 mole % of 2,6-diacetoxynaphthalene, 39 mole % of terephthalic acid and 0.05% by weight (based on the total charge) of potassium acetate were fed into a reactor fitted with a stirrer, a nitrogen inlet tube and an outlet for distillate and heated to 260 °C over a period of 1 hour in a nitrogen stream. While distilling off the generated acetic acid, the contents were heated to 260 to 300 °C for 2 hours, then at 300 to 320 °C for one hour and finally at 320 to 360 °C for one hour and kept in a vacuum to distill off the acetic acid. Nitrogen gas was introduced into the reactor to cool the contents to a room temperature. The obtained polymer was observed on a polarization hot stage with a polarization microscope to exhibit optical anisotropy at 369 °C. The melting point, resistance to soldering heat, ridigity, stability in melting and retention of rigidity were each determined by the above-mentioned methods. The results are shown in Table 1.

Examples 2 and 3

Various monomer mixtures were each polymerized with a final heating temperature set so as to be not below the temperature range in which the resulting polymer can flow in a similar manner to the one described in Example 1. The kinds and amounts of the monomers used are shown in Table 1. The obtained polymers were examined in a similar manner to the one described in Example 1. The results are shown in Table 1.

Comparative Examples 1 and 2

Various monomer mixtures were each polymerized with a final heating temperature set so as to be not below the temperature range in which the resulting polymer can flow in a similar manner to the one described in Example 1. The kinds and amounts of the monomers used are shown in Table 1. The obtained

polymers were examined in a similar manner to the one described in Example 1. The results are shown in Table 1.

Example 4

A composition comprising 100 parts by weight of the polymer prepared in Example 2 and 20 parts by weight of glass fiber was examined in a similar manner to the one described in Example 1. The results are shown in Table 1.

Table 1

| Example | Composition | | | | M.P. (°C) | Processability | Torsional rigidity ($kg/cm^2$) | | | Resistance to soldering heat | Stability in melting | Retention of rigidity |
|---|---|---|---|---|---|---|---|---|---|---|---|---|
| | HBA | DHN | TPA | Other | | | 260°C | 280°C | Retention | | | |
| Ex. 1 | 22 | 39 | 39 | — | 369 | O | 3,200 | 2,900 | 0.9 | O | O | 0.9 |
| Ex. 2 | 26 | 37 | 37 | — | 365 | O | 3,100 | 2,500 | 0.8 | O | O | 1.0 |
| Comp. Ex. 1 | 35 | 32.5 | 32.5 | — | 315 | O | 1,700 | 900 | 0.5 | × | O | 0.9 |
| Comp. Ex. 2 | 65 | 17.5 | 17.5 | — | 310 | O | 1,600 | 500 | 0.3 | × | O | 0.9 |
| Ex. 3 | 26 | 37 | 35 | IPA 2 | 351 | O | 3,400 | 2,400 | 0.7 | O | O | 1.0 |
| Ex. 4* | 26 | 37 | 37 | — | 370 | O | 13,000 | 11,500 | 0.9 | O | O | 0.9 |

HBA: p-acetoxybenzoic acid

DHN: 2,6-diacetoxynaphthalene

TPA: terephthalic acid

IPA: isophthalic acid

* Composition comprising 100 parts by weight of polymer and 20 parts by weight of glass fiber

## Claims

1. A polyester resin exhibiting optical anisotropy in a molten state which comprises constituent units represented by the following formulas (I) to (III) as essential components wherein the contents of the units (I), (II) and (III) are less than 30 mole %, 30 to 45 mole % and 30 to 45 mole %, respectively, based on the total amount of the constituent units:

( I ) 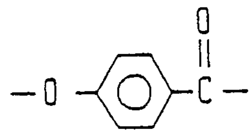

( II ) 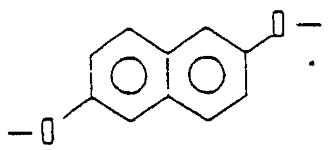

( III ) 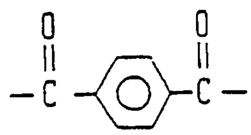

2. A polyester resin exhibiting optical anisotropy in a molten state as set forth in claim 1, wherein the content of the unit (I) is 20 to 29 mole % based on the total amount of the constituent units.

3. A polyester resin exhibiting optical anisotropy in a molten state as set forth in claim 1 or claim 2, wherein the content of the unit (II) is 35 to 40 mole % based on the total amount of the constituent units.

4. A polyester resin exhibiting optical anisotropy in a molten state as set forth in any preceding claim, wherein the content of the unit (III) is 35 to 40 mole % based on the total amount of the constituent units.

5. A polyester resin exhibiting optical anisotropy in a molten state as set forth in any preceding claim, which further contains a constituent unit represented by the following formula (IV) in an amount of 0.1 to 7 mole % based on the total amount of the constituent units:

( IV ) 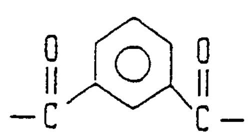

6. A polyester resin exhibiting optical anisotropy in a molten state as set forth in claim 5, wherein the content of the unit (I) is 0.5 to 5 mole % based on the total amount of the constituent units.

7. A polyester resin exhibiting optical anisotropy in a molten state as set forth in any preceding claim, which has a melting point as high as possible up to a temperature of about 370°C.

8. A polyester resin exhibiting optical anisotropy in a molten state as set forth in any preceding claim, which has a melt viscosity of at most $1 \times 10^6$ P under a shear of 100 $sec^{-1}$ at a temperature at least 10°C higher than its melting point.

9. A polyester resin composition which comprises a polyester resin exhibiting optical anisotropy in a molten state as set forth in any preceding claim and at most 95% by weight (based on the total amount of the composition) of an inorganic filler.

10. A polyester resin composition as set forth in claim 9, wherein the content of the inorganic filler is 1 to 80% by weight (based on the total amount of the composition).